# FASCICULE DE BREVET EUROPEEN

(11) **EP 3 393 802 B1**
(45) Date de publication et mention de la délivrance du brevet: **13.11.2019**
(21) Numéro de dépôt: 16829256.3
(22) Date de dépôt: 16.12.2016
(51) Int. Cl.: B32B 33/00, B32B 38/04, G06K 19/077, B42D 25/45

(54) **PROCÉDÉ DE FABRICATION PAR LAMINATION À CHAUD D'UNE CARTE À MICROCIRCUIT COMPORTANT UN FLEX DANS UNE CAVITÉ ET CARTE AINSI OBTENUE**
VERFAHREN ZUR HERSTELLUNG EINER MIKROSCHALTKARTE MIT FLEXIBLER SCHALTUNG IN EINEM HOHLRAUM DURCH WARMLAMINIERUNG UND AUF DIESE WEISE ERHALTENE KARTE
METHOD FOR PRODUCING A MICROCIRCUIT CARD COMPRISING A FLEX CIRCUIT IN A CAVITY BY HOT LAMINATION AND CARD OBTAINED IN THIS WAY

(30) Priorité: 22.12.2015 FR 1563148
(43) Date de publication de la demande: 31.10.2018
(73) Titulaire: IDEMIA France, 92700 Colombes (FR)
(72) Inventeur: GUERARD, Denis, 92700 Colombes (FR)
(74) Mandataire: Santarelli
(86) Numéro de dépôt international: PCT/FR2016/053534
(87) Numéro de publication internationale: WO 2017/109363

(56) Documents cités:
- FR-A1- 2 982 058
- "Introduction to PETF", DuPont Teijin Films , 31 décembre 2011 (2011-12-31), XP055302386, Extrait de l'Internet: URL:http://europe.dupontteijinfilms.com/me dia/56672/petf_for_durable_cards.pdf [extrait le 2016-09-14]

## Description

### Domaine de l'invention

L'invention concerne un procédé de fabrication par lamination d'une carte à microcircuit (parfois appelée carte à puce) visant à en assurer la planéité, même lorsque cette carte est inhomogène ou complexe.

Une telle inhomogénéité ou complexité peut être notamment constatée à propos d'une carte à puce comportant des composants électroniques tels que ceux nécessaires à l'affichage dynamique d'un code de vérification d'une carte bancaire.

### Etat de la technique et problème à résoudre

Ainsi qu'on le sait, de tels composants électroniques sont préalablement montés sur un support en PET (polyéthylène téréphtalate) ou en PI (polyimide), PEN (polyéthylène Naphtalate), pièce de métal..., l'ensemble étant appelé un flex.

Le corps de carte est laminé en ce sens qu'il comporte un ensemble de substrats internes entre deux couches externes (appelées overlay).

Certaines couches internes peuvent déjà avoir été complexées ensemble (par lamination, collage...). Par usage quel que soit le mode de complexage on appelle cet ensemble de couches « prélam ».

Les substrats du prélam et les overlays sont traditionnellement fabriqués en PVC.

Pour fabriquer un prélam d'une carte complexe, l'ensemble des substrats internes en PVC sont laminés (à chaud ou à froid), puis un trou traversant est découpé dans l'épaisseur du prélam. Le flex est positionné dans le trou et de la résine est déposée, puis polymérisée d'une manière appropriée (polymérisation par UV, par oxydoréduction, par catalyse, par chauffage...). Après polymérisation de la résine, le flex est maintenu en place et fixé au prélam. Le trou est en pratique à peine plus grand que le flex à y placer.

Il est alors possible d'intégrer le prélam entre deux substrats d'overlay sur lesquels on a réalisé, en pratique, une impression.

La carte complexe peut en outre comporter un module comportant d'un côté des plages de connexion par contact avec un lecteur externe et d'un autre côté au moins un microcircuit auquel sont connectées les plages de connexion, tel que connu pour les cartes du type « à contact ».

Aujourd'hui, l'intégration du prélam entre les deux overlays se fait par une lamination à froid.

Toutefois, une lamination à froid est une technologie moins rapide que les techniques de lamination à chaud de couches plastiques, et peut conduire à des cycles de fabrication très longs et incompatibles avec les cadences de production.

Quant aux techniques de lamination à chaud, elles sont plus utilisées, mieux maîtrisées et plus rapides que la lamination à froid, mais elles présentent l'inconvénient d'impliquer des températures élevées, typiquement de l'ordre de 130°C (voire plus), auxquelles les divers matériaux constitutifs de la future carte ont des comportements différents.

Plus précisément, après une lamination à chaud des overlays, il se produit des phénomènes de rétreint des matières plastiques lors du refroidissement (c'est-à-dire l'inverse du phénomène de dilatation se produisant lors de la montée en température depuis la température ambiante jusqu'à la température de lamination à chaud). Le rétreint est le processus qui conduit à une réduction des dimensions initiales d'une pièce ayant subi un chauffage, puis refroidie. Dans la présente demande, on entend par l'expression « taux de rétreint », ou « coefficient de rétreint », un rapport ou pourcentage de réduction des dimensions initiales de la pièce après un traitement thermique. Plus particulièrement, dans la présente invention, le rétreint est mesuré dans le plan principal de la carte, la réduction en épaisseur étant insignifiante comparée à la réduction dans le plan de la carte. Le taux de rétreint dépend de la température à laquelle est chauffée la pièce. Plus la température est élevée, plus le taux de rétreint sera important.

Le fait que le flex et le prélam soient formés de matériaux différents a pour conséquence, en cas de lamination à chaud, qu'il se produit des phénomènes différenciés de rétreint, ce qui a pour conséquence d'altérer la planéité de la carte d'une manière incompatible avec les normes de qualité exigées.

Plus précisément, les matériaux constituant le flex, notamment le polyimide, le PET (polyéthylène téréphtalate), le PEN (polyéthylène Naphtalate), ont des coefficients de dilatation, ou de rétreint, inférieurs à 1, très proches de zéro, alors que les matériaux constitutifs (en pratique du PVC, de l'ABS, du PLA, du PC, du PETg) du prélam, entourant la cavité occupée par le flex, ont des coefficients de dilatation/rétreint de plusieurs pourcents à 130°C, typiquement de l'ordre de 3% voire plus, pouvant atteindre de l'ordre de 5%. Il en découle que, lors du refroidissement de la carte laminée à chaud, le rétreint du prélam et des overlays tend à appliquer des efforts sur le flex qui, ne présentant pas de rétreint, est forcé à onduler (on parle de phénomène de vagues, dû aux reliefs en surface provoqués par le déplacement des composants électroniques dans le corps de carte après ondulation du support du flex).

Le document FR 2 982 058 divulgue notamment un procédé d'incorporation d'un module dans un support de données qui a une couche entre une première et une seconde face et qui est associée à un indicateur visuel. Le procédé implique par exemple la formation d'un évidement dans le support de données à partir de la première face en direction de la seconde face jusqu'à ce que l'opération de formation d'évidement révèle l'indicateur visuel, et la mise en place du module dans le support de données à l'emplacement où ledit évidement est formé.

### Présentation de l'invention

L'invention a pour objet un aménagement des couches d'une carte à puce obtenue par lamination permettant la mise en œuvre d'une technique de lamination à chaud, à une température pouvant atteindre voire dépasser 130°C, sans nuire à la planéité de la carte finalement obtenue.

Elle propose pour ce faire un aménagement de la structure du prélam d'une telle carte ; plus précisément, elle propose un prélam formé d'un complexe de matériaux plastiques dont les propriétés de rétreint sont proches de celles du flex qui lui est assemblé, c'est-à-dire un prélam qui ne se déforme quasiment pas après une lamination à chaud.

L'invention propose ainsi un procédé de fabrication d'une carte à microcircuit comportant, entre deux couches d'overlay formant les faces extérieures de cette carte, un film plastique ayant un taux de rétreint inférieur à 1% après un chauffage compris entre 100°C et 250°C et portant au moins un composant électronique et un ensemble de couches dans lequel est formée une cavité contenant ledit film et le composant électronique, selon lequel
- On forme ledit ensemble en sorte qu'il comporte une couche centrale en un matériau plastique dont le taux de rétreint est inférieur à 1% après un chauffage entre 100°C et 250°C entre deux couches en matière plastique ayant un taux de rétreint compris entre 3% et 5% après un chauffage entre 100°C et 250°C,
- On forme au travers de cet ensemble une cavité traversante, dont la surface vaut entre 60% et 90% de la surface des faces extérieures de la carte à microcircuit à fabriquer,
- On noie le film et le composant électronique dans une résine en sorte d'occuper le volume de la cavité,
- On lamine à chaud, à une température d'au moins 110°C, cet ensemble de couches comportant la résine et le film avec le composant électronique, entre deux couches transparentes d'overlay, en sorte d'obtenir une carte à microcircuit présentant des faces planes.

De manière avantageuse, le film est en polyimide. Les couches d'overlay sont de préférence transparentes. Par ailleurs, ledit ensemble est avantageusement formé d'une couche centrale en polyéthylène téréphtalate à orientation biaxiale, ou PETf, entre deux couches de polyvinyle de chlorure, ou PVC, d'épaisseurs égales.

De manière également avantageuse, la couche centrale a une épaisseur au plus égale à 300 micromètres et représentant entre 25% et 150% de l'épaisseur de chacune des couches d'épaisseurs égales.

Les couches d'overlay sont avantageusement formées d'une couche d'impression longée extérieurement par une couche transparente.

De manière préférée, les couches en matière plastique formant la carte à microcircuit sont symétriques (en nature et en épaisseur) par rapport à la couche centrale (plus précisément par rapport à un plan passant par la couche centrale). En d'autres termes, la carte a une structure symétrique par rapport à un plan de symétrie de la couche centrale, de manière à éviter au mieux l'effet de vagues ou d'ondulation.

De manière avantageuse, les deux couches en PVC sont dédoublées en deux sous-couches, ce qui facilite l'intégration de composants dans ces couches (à l'interface entre les sous-couches ou à l'intérieur de l'une d'entre elles). Les sous-couches longeant la couche centrale ont, par exemple, une épaisseur d'au moins 150% de l'épaisseur des sous-couches longeant les couches transparentes d'overlay.

De manière avantageuse, on forme dans l'une des couches en PVC au moins un composant (par exemple une antenne de communication sans contact avec l'extérieur) qui est connecté à un microcircuit que comporte la carte à microcircuit à fabriquer.

Selon un autre aspect l'invention propose une carte à microcircuit obtenue par le procédé précité, comportant entre deux couches d'overlay formant les faces extérieures de cette carte, un film en un matériau plastique ayant un taux de rétreint inférieur à 1% après un chauffage compris entre 100°C et 250°C et portant au moins un composant électronique et un ensemble d'au moins trois couches dans lequel est formée une cavité contenant ledit film et le composant électronique, dans lequel
- La cavité formée dans ledit ensemble est traversante et la surface de la cavité vaut entre 60% et 90% de la surface des faces extérieures de la carte à microcircuit,
- ledit ensemble de couches comporte une couche centrale en en un matériau plastique dont le taux de rétreint est inférieur à 1% après un chauffage compris entre 100°C et 250°C, entre deux couches en matière plastique dont le taux de rétreint est compris entre 3% et 5% après un chauffage compris entre 100°C et 250°C,
- le film et le composant électronique étant noyés dans une résine occupant le volume de la cavité,
- cette carte à microcircuit présentant des faces extérieures planes.

Par analogie avec ce qui a été indiqué à propos du procédé, de manière avantageuse :
- les deux couches d'overlay sont transparentes,
- le film est en polyimide,
- la couche centrale est en polyéthylène téréphtalate à orientation biaxiale ou PETf,
- les deux couches entre lesquelles cette couche centrale est prise en sandwich sont en polyvinyle de chlorure ou PVC, ces couches étant de préférence d'épaisseurs égales,
- la couche centrale a par exemple une épaisseur au plus égale à 300 micromètres et représentant entre 20% et 150% de l'épaisseur de chacune des couches entre lesquelles elle est prise en sandwich,
- la cavité traverse l'ensemble de la couche centrale et des couches entre lesquelles cette couche centrale est en sandwich,
- la surface de la cavité vaut entre 60% et 90% de la surface de la surface des faces extérieures de la carte à microcircuit,
- les couches d'overlay sont avantageusement formées d'une couche d'impression longée extérieurement par une couche transparente,
- les couches en matière plastique formant la carte à microcircuit sont symétriques (en nature et en épaisseur) par rapport à un plan passant par la couche centrale,
- les deux couches prenant la couche centrale en sandwich sont dédoublées en deux sous-couches,
- les sous-couches longeant la couche centrale ont une épaisseur d'au moins 150% de l'épaisseur des sous-couches longeant les couches transparentes d'overlay,
- on forme au moins un composant dans l'une des couches en PVC qui est connecté à un microcircuit que comporte la carte à microcircuit à fabriquer ; il s'agit par exemple d'une antenne de communication sans contact avec l'extérieur.

Enfin, selon un aspect non revendiqué, la présente demande porte sur le produit intermédiaire constitué par l'ensemble de couches formant le prélam, à savoir un ensemble de couches pour la mise en œuvre du procédé précité pour la fabrication d'une carte à microcircuit du type qui vient d'être défini, dans lequel
- ledit ensemble de couches comporte une couche centrale en un matériau plastique dont le taux de rétreint est inférieur à 1% après un chauffage compris entre 100°C et 250°C, par exemple du polyéthylène téréphtalate à orientation biaxiale ou PETf, entre deux couches en un matériau plastique dont le taux de rétreint est compris entre 3% et 5% après un chauffage compris entre 100°C et 250°C, par exemple en polyvinyle de chlorure ou PVC, d'épaisseurs avantageusement égales, cette couche centrale ayant par exemple une épaisseur au plus égale à 300 micromètres et représentant entre 75% et 150% de chacune des deux couches qui la prennent en sandwich,
- une cavité traverse la totalité de l'ensemble de couches en ayant une surface valant de préférence entre 30% et 90% de la surface des faces extérieures de la carte à microcircuit à fabriquer.

### Description de l'invention

Des objets, caractéristiques et avantages de l'invention ressortent de la description qui suit, donnée à titre d'exemple illustratif non limitatif, en regard du dessin annexé sur lequel :
- La figure 1 est une vue partielle en coupe d'une carte obtenue par lamination à froid, de manière connue, et
- La figure 2 est une vue partielle en coupe d'une carte obtenue par lamination à chaud, conforme à l'invention.

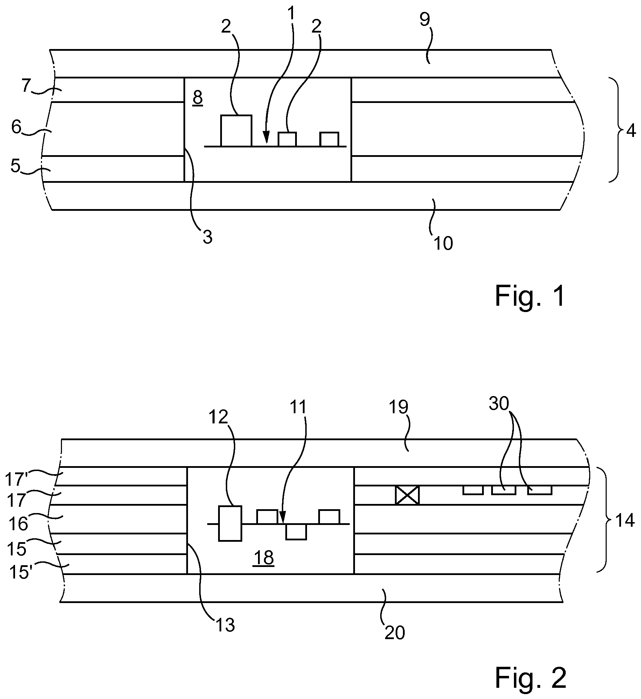

La carte à microcircuit représentée en partie à la figure 1 comporte, de manière connue, un flex 1, portant des composants électroniques 2 et monté à l'intérieur d'une cavité 3 formée à l'intérieur d'un prélam 4 formé de plusieurs couches, ici au nombre de trois, à savoir les couches 5 à 7. Le flex est noyé dans une masse de résine 8 qui remplit la cavité ; deux couches d'overlay 9 et 10 recouvrent les faces inférieure et supérieure du prélam et de la masse de résine englobant le flex. La cavité est à peine plus grande que le flex, typiquement de 1 à 2 mm plus grande, parallèlement aux faces planes de la carte, que le contour de ce flex.

De manière classique la couche centrale 6 du prélam est en PVC, de même que les couches 5 et 7 qui prennent cette couche centrale en sandwich ; les couches d'overlay, habituellement transparentes, (éventuellement longées par des couches d'impression, sont également formées de PVC. Comme indiqué plus haut, une telle configuration doit habituellement être laminée à froid, pour éviter que des phénomènes différenciés de dilatation/rétreint ne provoquent l'apparition d'ondulations à l'emplacement de la cavité, provoquant localement des ondulations des couches d'overlay 9 et 10. En effet le retreint des couches en PVC, supérieur à celui du flex, entraîne une diminution de la circonférence du trou. Cette diminution est suffisante pour comprimer et onduler le flex et la résine principalement dans le plan de la carte, ce qui va entraîner des déformations sous forme de vagues ou ondulations à la surface de la carte.

Conformément à l'invention, la carte de la figure 2 a une structure dans laquelle les différentes parties ont des comportements en rétreint qui sont sensiblement identiques en cas de lamination à chaud, évitant ainsi qu'une telle lamination à chaud se traduise par une mauvaise planéité des grandes faces de la carte finale.

En fait, comme indiqué ci-dessus, l'un des matériaux couramment utilisés pour la fabrication d'un flex est le polyimide, PI en abrégé, qui a un coefficient de dilatation/rétreint quasi-nul jusqu'à des températures de l'ordre de 130°C, ne dépassant pas 1% après un chauffage à 250°C. Toutefois, d'autres matériaux sont également connus dans le domaine de la fabrication des cartes à puce, que les opérateurs de lamination à chaud savent donc manipuler de manière fiable et efficace ; il s'agit du PVC (polychlorure de vinyle), le PC (polycarbonate), le PEN (polyéthylène naphtalate) le PETg (polyéthylène téréphtalate glycolisé), ainsi que le PETf (polyéthylène téréphtalate en film, ou PET à orientation biaxiale).

Or il est apparu que le PETf, habituellement apprécié pour des raisons de respect de l'environnement et de résistance au déchirement et de durabilité pour un coût de production raisonnable faible, a la particularité d'avoir un coefficient de dilatation/rétreint de quelques fractions de pourcent, typiquement compris entre 0,5 - 1%. Toutefois, l'utilisation d'une monocouche PETf n'est envisageable que pour des substrats fins, car il n'existe pas en pratique de couche PETf d'épaisseur supérieure à 300µm ; en outre, le PETf a des propriétés d'impression et de collage très inférieures à celles qui sont reconnues au PVC dans l'industrie de la carte à puce.

Il est apparu qu'il était possible de combiner du PETf et du PVC en sorte de combiner le très faible rétreint du PETf et les propriétés exceptionnelles d'imprimabilité et de collage du PVC, au sein d'un prélam contenant un flex formé de composants électroniques en PI.

Ainsi, il a été constaté que, si le prélam est formé d'une couche en PETf entre des couches inférieure et supérieure en PVC ou autres plastiques cités précédemment, l'effet d'ondulation est supprimé car la couche de PETf maintient les couches de PVC et empêche ces dernières de rétrécir à un taux supérieur à 1%. Le phénomène de vagues est donc évité.

De plus si le prelam est formé d'une couche centrale en PETf entre des couches inférieure et supérieure en PVC de même épaisseur (en d'autres termes, si la couche en PETf, nécessairement fine, est correctement centrée au milieu de l'épaisseur du prélam par ailleurs formé de PVC), et/ou si la cavité est une ouverture traversante (donc s'étendant d'une face à l'autre du prélam) dont l'aire vaut de 60% à 90% de celle du prélam, il ne se produit aucun phénomène significatif de galbage/tuilage après une lamination à chaud (au-dessus de 110°C, typiquement vers 130°C, voire au-delà) entre deux couches d'overlay, typiquement en PVC, éventuellement transparent.

Des commentaires similaires peuvent être formulés à propos du PEN dont le taux de rétreint est également très faible.

Ainsi, selon l'invention, on ne subit pas le phénomène de galbage pourtant constaté dans des documents tels que EP - 0 488 574 ou US - 6 644 552 avec une couche de PET dans un corps en PVC.

En fait, on peut penser que cet effet de galbage est évité en raison de cette position centrale de la couche de PETf, mais aussi au fait que la cavité traversante est suffisamment importante pour limiter les effets de galbage (voir la plage précitée d'environ 60% à 90% de la surface totale de la carte).

Il est supposé que le rapport précité de 60% à 90% de l'aire de l'ouverture par rapport à la surface de la carte permet de limiter les effets de distorsion entre le PVC qui rétrécit et le PETf qui ne rétrécit quasiment pas, malgré la finesse de cette couche de PETf par rapport à l'épaisseur des couches de PVC. Il semble par contre que, si la cavité est plus petite, sa présence n'a pas d'effet significatif sur le contrôle du rétreint.

Un exemple de carte selon l'invention est ainsi formé, ainsi que cela est schématisé à la figure 2 (les épaisseurs n'étant pas à l'échelle pour des raisons de lisibilité du dessin) d'un prélam 14 formé d'une couche centrale 16 en PETf, prise en sandwich entre deux couches d'impression 15 et 17 en PVC, et d'un flex 11 comportant des composants électroniques 12, noyés dans une résine 18 occupant, conjointement avec ce flex, le volume d'une cavité traversante 13 formé au travers de ce prélam. L'ensemble de ce prélam et de cette masse de résine est pris et laminé entre deux couches d'overlay 19 et 20.

Dans l'exemple représenté, les couches 15 et 17 sont en fait dédoublées (les couches 15 et 17 sont respectivement longées par des couches 15' et 17'), la couche 17 contenant ici des spires d'une antenne 30 grâce à laquelle la carte représentée en partie peut communiquer sans contact avec un terminal à l'extérieur.

A titre d'exemple pour une épaisseur globale de l'ordre de 760 micromètres, à savoir l'épaisseur normalisée d'une carte à puce conforme à la norme ISO - 7816 ou ISO - 14443 :
- la couche centrale en PETf a une épaisseur de 125 micromètres,
- les couches 15 et 17 ont chacune une épaisseur de 100 micromètres,
- les couches 15' et 17' ont chacune une épaisseur de 50 micromètres, et
- les couches d'overlay, capables de recevoir une impression, ont chacune une épaisseur de 168 micromètres.

Dans le cas de couches d'overlay transparentes, celles-ci peuvent, en variante, avoir une épaisseur de 40-50 micromètres, en étant longées intérieurement par une couche d'impression d'épaisseur de 110-120 micromètres environ.

Ainsi, la couche centrale en PETf a ici une épaisseur représentant entre 25% et 150%, de celle de chacune des doubles couches de PVC situées au-dessus et en dessous de celle-ci.

Les couches en PVC entre lesquelles la couche centrale en PETf est située ont une épaisseur sensiblement supérieure à l'épaisseur des couches en PVC qui sont adjacentes aux couches d'overlay ; leur épaisseur est par exemple comprise entre 150% et 250% de l'épaisseur de ces couches adjacentes aux couches d'overlay. Cela permet l'implantation d'éléments de circuit connectés au microcircuit (non représenté) de la carte à puce à fabriquer.

La résine enrobant le flex est ici une résine epoxy ou acrylique issue de la même famille que les résines utilisées pour enrober le module. Ce sont des résines largement utilisées dans le domaine de l'électronique.

Des essais menés à 130°C montrent que la planéité des cartes avec un prélam formé d'un tel complexe PVC/PETf est largement acceptable contrairement aux cartes en PVC pur.

Le fait que le PETf ne colle généralement pas très bien sur le PVC peut être surmonté par un traitement de surface que les fabricants de PETf connaissent bien ; il s'agit typiquement d'ajout, par co-extrusion, d'une couche de très faible épaisseur (1 à 10µm) de co-polymère. L'épaisseur de cette couche est tellement faible qu'elle n'a aucune influence sur le rétreint. Il peut y avoir en plus une dépose d'une colle (acrylique ou autre...) pour assurer l'imperméabilité et/ou l'adhésion du PET avec une autre couche.

Comme indiqué ci-dessus, le PETf et le PVC sont assemblés par lamination à chaud si le PET est au centre ; on comprend toutefois que, si l'on choisit de positionner la couche de PETf de manière excentrée (ou si cette couche n'existe pas), il vaut mieux procéder par une lamination à froid (il n'y a alors pas de surface minimum requise pour la cavité par rapport à la surface totale des couches).

Le PET peut être remplacé par du PEN, notamment.

Les composants électroniques peuvent être des composants de visualisation ou des composants de saisie, par exemple un composant de saisie d'empreinte digitale ou encore un écran affichant un code de sécurité destiné à être utilisé en combinaison avec un numéro d'identification de carte bancaire et une date d'expiration pour effectuer un paiement ; la carte peut être une carte bancaire, typiquement au format ID-1 tel que défini dans la norme ISO - 7810 ou ISO7816 précitée, du type à contact, du type sans contact ou du type dual, c'est-à-dire une carte permettant une communication par contact avec un certain type de terminal extérieur et sans contact avec un autre type de terminal extérieur ; la communication avec l'extérieur peut être limitée à ce que l'on appelle la communication en champ proche (« Near Field Communication ») à savoir une communication sans contact avec une portée d'à peine quelques dizaines de centimètres, voire quelques centimètres à peine.

L'exemple considéré ci-dessus comporte un flex en polyimide, mais on comprend que l'invention s'applique pour toute carte formée de divers matériaux ayant des coefficients significativement différents de dilatation/rétreint mais qu'on souhaite fabriquer par lamination à chaud.

## Revendications

1. Procédé de fabrication d'une carte à microcircuit comportant, entre deux couches d'overlay formant les faces extérieures de cette carte, un film en plastique dont le taux de rétreint est inférieur à 1% après un chauffage compris entre 100° et 250°C, et portant au moins un composant électronique et
un ensemble de couches dans lequel est formée une cavité contenant ledit film et le composant électronique, comportant des étapes consistant à :
- former ledit ensemble en sorte qu'il comporte une couche centrale (16) en un matériau plastique dont le taux de rétreint est inférieur à 1% après un chauffage compris entre 100° et 250°C, entre deux couches (15, 17) en matière plastique dont le taux de rétreint est compris entre 3% et 5% après un chauffage compris entre 100°C et 250°C,
- former au travers de cet ensemble une cavité (13) traversante, dont la surface vaut entre 60% et 90% de la surface des faces extérieures de la carte à microcircuit à fabriquer,
- noyer le film et le composant électronique (12) dans une résine (18) en sorte d'occuper le volume de la cavité,
- laminer à chaud, à une température d'au moins 110°C, cet ensemble de couches comportant la résine et le film avec le composant électronique, entre deux couches d'overlay (19, 20), en sorte d'obtenir une carte à microcircuit présentant des faces planes.

2. Procédé selon la revendication 1 selon lequel le film est en polyimide et ledit ensemble est formé d'une couche centrale (16) en polyéthylène téréphtalate à orientation biaxiale, ou PETf, entre deux couches (15, 17) de polyvinyle de chlorure, ou PVC, d'épaisseurs égales.

3. Procédé selon la revendication 1 ou la revendication 2, dans lequel cette couche centrale a une épaisseur au plus égale à 300 micromètres et représentant entre 25% et 150% de chacune des deux couches entre lesquelles cette couche centrale est prise en sandwich.

4. Procédé selon l'une des revendications précédentes, dans lequel les couches en matière plastique sont symétriques par rapport à la couche centrale.

5. Procédé selon l'une quelconque des revendications 1 à 4, selon lequel les deux couches entre lesquelles la couche centrale est située sont dédoublées en deux sous-couches (15, 15', 17, 17').

6. Procédé selon la revendication 2, selon lequel les sous-couches (15, 17) longeant la couche centrale ont une épaisseur d'au moins 150% de l'épaisseur des sous-couches (15', 17') longeant les couches transparentes d'overlay.

7. Procédé selon l'une quelconque des revendications 1 à 6, selon lequel est formé, dans l'une des couches dudit ensemble situées de part et d'autre de la couche centrale, au moins un composant (30) qui est connecté à un microcircuit que comporte la carte à microcircuit à fabriquer.

8. Carte à microcircuit obtenue par le procédé selon l'une quelconque des revendications 1 à 7, comportant entre deux couches d'overlay formant les faces extérieures de cette carte, un film en matériau plastique dont le taux de rétreint est inférieur à 1% après un chauffage compris entre 100°C et 250°C et portant au moins un composant électronique et un ensemble d'au moins trois couches dans lequel est formée une cavité contenant ledit film et le composant électronique, dans lequel
- la cavité (13) formée dans ledit ensemble est traversante et la surface de la cavité vaut entre 60% et 90% de la surface des faces extérieures de la carte à microcircuit,
- ledit ensemble de couches comporte une couche centrale en un matériau plastique dont le taux de rétreint est inférieur à 1% après un chauffage compris entre 100°C et 250°C, entre deux couches en matière plastique dont le taux de rétreint est compris entre 3% et 5% après un chauffage compris entre 100°C et 250°C,
- le film et le composant électronique étant noyés dans une résine occupant le volume de la cavité,
- cette carte à microcircuit présentant des faces extérieures planes.

9. Carte à microcircuit selon la revendication 8 dans laquelle le film est en polyimide et ledit ensemble est formé d'une couche centrale (16) en polyéthylène téréphtalate à orientation biaxiale, ou PETf, entre deux couches (15, 17) de polyvinyle de chlorure, ou PVC, d'épaisseurs égales.

10. Carte à microcircuit selon l'une quelconque des revendications 8 ou 9 dans laquelle au moins un composant est situé dans l'une des couches entre lesquelles est située la couche centrale en étant connecté à un microcircuit que comporte ladite carte à microcircuit.

11. Carte à microcircuit selon la revendication 10, dans laquelle ledit composant est une antenne de communication sans contact.

## Patentansprüche

1. Verfahren zur Herstellung einer Mikroschaltungskarte, umfassend zwischen zwei Overlay-Schichten, die die Außenflächen dieser Karte bilden, eine Kunststofffolie, deren Schrumpfrate nach dem Erwärmen zwischen 100 und 250 °C weniger als 1 % beträgt, und die mindestens eine elektronische Komponente und
eine Anordnung von Schichten trägt, in der ein Hohlraum gebildet wird, der die Folie und die elektronische Komponente enthält, umfassend die folgenden Schritte:
- Bilden der Anordnung, so dass sie eine zentrale Schicht (16) aus einem Kunststoffmaterial umfasst, dessen Schrumpfrate nach dem Erwärmen zwischen 100 und 250 °C weniger als 1 % beträgt, zwischen zwei Schichten (15, 17) aus Kunststoffmaterial, dessen Schrumpfrate nach dem Erwärmen zwischen 100 und 250 °C zwischen 3 % und 5 % liegt,
- Bilden eines durchlässigen Hohlraums (13) durch diese Anordnung, dessen Oberfläche zwischen 60 % und 90 % der Oberfläche der Außenflächen der herzustellenden Mikroschaltungskarte beträgt,
- Einlegen der Folie und der elektronischen Komponente (12) in ein Harz (18), um das Volumen des Hohlraums zu belegen,
- Warmlaminieren dieser Schichtenanordnung, die das Harz und die Folie mit der elektronischen Komponente umfasst, bei einer Temperatur von mindestens 110° C, zwischen zwei Overlay-Schichten (19, 20), um eine Mikroschaltungskarte mit ebenen Flächen zu erhalten.

2. Verfahren nach Anspruch 1, nach dem die Folie aus Polyimid besteht und die Anordnung aus einer zentralen Schicht (16) aus biaxial orientiertem Polyethylenterephthalat oder PETf zwischen zwei Schichten (15, 17) aus Polyvinylchlorid oder PVC gleicher Dicke gebildet wird.

3. Verfahren nach Anspruch 1 oder 2, wobei diese zentrale Schicht eine Dicke von höchstens 300 Mikrometern aufweist und zwischen 25 % und 150 % jeder der beiden Schichten ausmacht, zwischen denen die zentrale Schicht sandwichartig angeordnet ist.

4. Verfahren nach einem der vorstehenden Ansprüche, bei dem die Kunststoffschichten symmetrisch zur zentralen Schicht sind.

5. Verfahren nach einem der Ansprüche 1 bis 4, nach dem die beiden Schichten, zwischen denen sich die zentrale Schicht befindet, in zwei Unterschichten (15, 15', 17, 17') unterteilt sind.

6. Verfahren nach Anspruch 2, nach dem die Unterschichten (15, 17) entlang der zentralen Schicht eine Dicke von mindestens 150 % der Dicke der Unterschichten (15', 17') entlang der transparenten Overlay-Schichten aufweisen.

7. Verfahren nach einem der Ansprüche 1 bis 6, nach dem mindestens eine Komponente (30) in einer der Schichten der Anordnung gebildet wird, die sich auf beiden Seiten der zentralen Schicht befinden, und mit einer Mikroschaltung verbunden ist, die in der herzustellenden Mikroschaltungskarte enthalten ist.

8. Mikroschaltungskarte, die durch das Verfahren nach einem der Ansprüche 1 bis 7 erhalten wird, umfassend zwischen zwei Overlay-Schichten, die die Außenflächen dieser Karte bilden, eine Folie aus Kunststoffmaterial, dessen Schrumpfrate nach dem Erwärmen zwischen 100 und 250 °C weniger als 1 % beträgt, und die mindestens eine elektronische Komponente trägt, und eine Anordnung von mindestens drei Schichten, in der ein Hohlraum gebildet ist, der die Folie und die elektronische Komponente enthält, wobei
- der in der Anordnung gebildete Hohlraum (13) durchlässig ist und die Oberfläche des Hohlraums zwischen 60 % und 90 % der Oberfläche der Außenflächen der Mikroschaltungskarte beträgt,
- die Anordnung von Schichten eine zentrale Schicht aus einem Kunststoffmaterial umfasst, dessen Schrumpfrate nach dem Erwärmen zwischen 100 und 250 °C weniger als 1 % beträgt, zwischen zwei Schichten aus Kunststoffmaterial, dessen Schrumpfrate nach dem Erwärmen zwischen 100 und 250 °C zwischen 3 % und 5 % liegt,
- wobei die Folie und die elektronische Komponente in ein Harz eingelegt sind, das das Volumen des Hohlraums belegt,
- die Mikroschaltungskarte ebene Außenflächen aufweist.

9. Mikroschaltungskarte nach Anspruch 8, bei der die Folie aus Polyimid besteht und die Anordnung aus einer zentralen Schicht (16) aus biaxial orientiertem Polyethylenterephthalat oder PETf zwischen zwei Schichten (15, 17) aus Polyvinylchlorid oder PVC gleicher Dicke gebildet wird.

10. Mikroschaltungskarte nach einem der Ansprüche 8 oder 9, wobei sich mindestens eine Komponente in einer der Schichten befindet, zwischen denen sich die zentrale Schicht befindet, indem sie mit einer in der Mikroschaltungskarte enthaltenen Mikroschaltung verbunden ist.

11. Mikroschaltungskarte nach Anspruch 10, wobei die Komponente eine kontaktlose Kommunikationsantenne ist.

## Claims

1. Process for manufacturing a microcircuit card comprising, between two overlay layers forming the outer faces of this card, a plastic film, of which the degree of shrinkage is less than 1% after heating between 100°C and 250°C, and bearing at least one electronic component and an assembly of layers wherein a cavity is formed that contains said film and the electronic component, comprising the steps consisting in:
- forming said assembly so that it comprises a central layer (16) made of a plastic, of which the degree of shrinkage is less than 1% after heating between 100°C and 250°C, between two layers (15, 17) made of a plastic, of which the degree of shrinkage is between 3% and 5% after heating between 100°C and 250°C,
- forming a through-cavity (13) through this assembly, the surface area of which is equal to between 60% and 90% of the surface area of the outer faces of the microcircuit card to be manufactured,
- embedding the film and the electronic component (12) in a resin (18) so as to occupy the volume of the cavity,
- hot laminating, at a temperature of at least 110°C, this assembly of layers comprising the resin and the film with the electronic component, between two overlay layers (19, 20) so as to obtain a microcircuit card having flat faces.

2. Process according to Claim 1, wherein the film is made of polyimide and said assembly is formed of a central layer (16) made of biaxially-oriented polyethylene terephthalate, or PETf, between two layers (15, 17) of polyvinyl chloride, or PVC, of equal thicknesses.

3. Process according to Claim 1 or Claim 2, wherein this central layer has a thickness at most equal to 300 micrometers and representing between 25% and 150% of each of the two layers between which this central layer is sandwiched.

4. Process according to one of the preceding claims, wherein the layers made of plastic are symmetrical relative to the central layer.

5. Process according to any one of Claims 1 to 4, wherein the two layers between which the central layer lies are split into two sublayers (15, 15', 17, 17').

6. Process according to Claim 2, wherein the sublayers (15, 17) bordering the central layer have a thickness of at least 150% of the thickness of the sublayers (15', 17') bordering the transparent overlay layers.

7. Process according to any one of Claims 1 to 6, wherein, in one of the layers of said assembly located on either side of the central layer, at least one component (30) is formed which is connected to a microcircuit that the microcircuit card to be manufactured comprises.

8. Microcircuit card obtained by the process according to any one of Claims 1 to 7, comprising between two overlay layers forming the outer faces of this card, a film made of plastic, of which the degree of shrinkage is less than 1% after heating between 100°C and 250°C and bearing at least one electronic component and an assembly of at least three layers wherein a cavity is formed that contains said film and the electronic component, wherein:
- the cavity (13) formed in said assembly is a through-cavity and the surface area of the cavity is equal to between 60% and 90% of the surface area of the outer faces of the microcircuit card,
- said assembly of layers comprises a central layer made of a plastic, of which the degree of shrinkage is less than 1% after heating between 100°C and 250°C, between two layers made of plastic, of which the degree of shrinkage is between 3% and 5% after heating between 100°C and 250°C,
- the film and the electronic component being embedded in a resin occupying the volume of the cavity,
- this microcircuit card having flat outer faces.

9. Microcircuit card according to Claim 8, wherein the film is made of polyimide and said assembly is formed of a central layer (16) made of biaxially-oriented polyethylene terephthalate, or PETf, between two layers (15, 17) of polyvinyl chloride, or PVC, of equal thicknesses.

10. Microcircuit card according to either one of Claims 8 and 9, wherein at least one component is located in one of the layers between which the central layer is located while being connected to a microcircuit that said microcircuit card comprises.

11. Microcircuit card according to Claim 10, wherein said component is a contactless communication antenna.
